(19) Europäisches Patentamt
European Patent Office
Office européen des brevets

(11) **EP 4 597 152 A1**

(12) **EUROPEAN PATENT APPLICATION**

(43) Date of publication:
**06.08.2025 Bulletin 2025/32**

(21) Application number: **24154804.9**

(22) Date of filing: **30.01.2024**

(51) International Patent Classification (IPC):
**G01S 7/292** (2006.01)     **G01S 13/58** (2006.01)
**G01S 13/72** (2006.01)     **G01S 13/87** (2006.01)
**G01S 13/89** (2006.01)     **G01S 13/931** (2020.01)

(52) Cooperative Patent Classification (CPC):
**G01S 13/931; G01S 7/2923; G01S 13/588;**
**G01S 13/723; G01S 13/878; G01S 13/89;**
G01S 2013/9318; G01S 2013/93185

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicants:
• **VOLKSWAGEN AG**
  **38440 Wolfsburg (DE)**
• **Scania CV AB**
  **151 87 Södertälje (SE)**

(72) Inventors:
• **Kurz, Dr. Heiko**
  **30177 Hannover (DE)**
• **Gisder, Dr. Thomas**
  **38446 Wolfsburg (DE)**
• **Meinecke, Dr. Marc-Michael**
  **38524 Sassenburg (DE)**
• **Johansson, Mikael**
  **15594 Nykvarn - Schweden (SE)**

(74) Representative: **Hofstetter, Schurack & Partner**
**Patent- und Rechtsanwaltskanzlei**
**PartG mbB**
**Balanstraße 73 / Haus 31A**
**81541 München (DE)**

(54) **METHOD TO PROVIDE A MOVEMENT INFORMATION ABOUT AT LEAST ONE SECOND VEHICLE BY A FIRST VEHICLE AND RADAR SYSTEM**

(57)     The invention relates to a method to provide a movement information (20) about at least one second vehicle (5) by a first vehicle (1), comprising: capturing a radar information (16) describing at least a part of an environment (6in which the at least one second vehicle (5) is located at least at two consecutive points in time; determining a three-dimensional point cloud (9) for each point in time; determining a relation information (18) describing a translational and rotational relation between the point clouds (9); determining a movement information (20) describing a movement of the at least one second vehicle (5); and providing the determined movement information (20). A radar system (2) captures the radar information (16) by using at least partially optical transmission techniques for radar system internal transmission of data and/or information between individual radar devices (3) and a central control device (4) of the radar system (2).

Fig. 1

EP 4 597 152 A1

**Description**

The invention relates to a method to provide a movement information about at least one second vehicle by a first vehicle. Moreover, the invention relates to a radar system for a vehicle and a vehicle to perform such a method.

A vehicle may comprise at least one radar device configured to capture at least one object in an environment of the vehicle. Typically, the vehicle comprises multiple radar devices. The multiple radar device may be distributed around the vehicle. By the radar devices, the object is detectable even at conditions of bad sight, such as rain, fog, snow, dust and/or darkness. However, a resolution of a radar system that comprises multiple radar devices may be low compared to other environment sensor systems. Moreover, there may be time consuming data transmission and/or time consuming processing of radar information by the multiple individual radar devices.

US 2023/0136923 A1 discloses a method and apparatus with vehicle radar control. At least one processor is configured to collect environmental information of the vehicle and to determine a radar mode of the vehicle based on the collected environmental information. One or more control signals to control one or more of transmitting antenna arrays and/or receiving antenna arrays of the apparatus is determined based on the determined radar mode.

US 2022/0231406 A1 discloses a radar antenna arrangement for a vehicle. The radar antenna arrangement comprises a plurality of radar devices which are configured to transmit and/or receive a radar beam. For the radar antenna arrangement at least one antenna row for determining an azimuthal angle of the radar beam is provided.

DE 10 2019 114 883 B3 discloses an arrangement of radar antennas for a vehicle which are located at a window panel.

DE 10 2017 221 257 A1 discloses a radar system comprising a radar transmitting unit, a radar receiving unit, a central unit and a glass fiber connecting these units.

It is the object of the invention to quickly provide a movement information about a vehicle in an environment of another vehicle.

The independent claims solve the object.

A first aspect of the invention relates to a method to provide a movement information about at least one second vehicle by a first vehicle. The movement information describes a movement of the second vehicle. The movement information may, for example, describe a rotation and/or velocity of the second vehicle or another detail about its movement. The first vehicle and the second vehicle are two different vehicles. The first vehicle may alternatively be referred to as ego vehicle and the at least one second vehicle as other vehicle that differs from the ego vehicle. The first vehicle performs the method. In particular a radar system of the first vehicle performs the method.

The method comprises capturing a radar information describing at least a part of an environment of the first vehicle in which the at least one second vehicle is located. The radar information may describe, for example, the entire environment of the first vehicle or just the part of the environment. The part of the environment is a section or subarea of the environment. The part of the environment may comprise the environment in a front area, a rear area and/or at least one side area of the vehicle. The radar information may comprise radar data or may be referred to as radar data.

The captured radar information describes the at least part of the environment at least at two consecutive points in time. For example, the radar information describes the part of the environment at a first point in time and at a second point in time that is different from the first point in time. For example, the radar information may be divided into multiple frames, each frame describing the at least part of the environment at a respective point in time, meaning that each frame is captured at a different point in time compared to the other frames. In a preferred example, the radar information is captured continuously, in particular while the first vehicle is driving and/or activated. Then, the radar information may be captured continuously in predetermined time intervals.

The radar system of the first vehicle captures the radar information. The radar system comprises multiple radar devices. Each one of the multiple radar devices comprises, for example, at least one transmitting and/or receiving antenna and/or a control unit. The control unit may at least control the at least one transmitting and/or receiving antenna. Moreover, the radar system comprises a central control device that is at least configured to control the individual radar devices of the radar system.

There may be multiple second vehicles located in the environment of the first vehicle that may be described by the radar information. In case of multiple second vehicles the radar information may describe each one or at least some of the multiple second vehicles.

The method comprises determining a three-dimensional point cloud for each point in time. The respective three-dimensional point cloud is determined by applying a point cloud determining algorithm on the captured radar information. The respective point cloud describes the at least one second vehicle. The respective three-dimensional point cloud comprises multiple points. Each one of the multiple points may describe a point on a surface of the at least one second vehicle at which an electromagnetic wave emitted by the respective radar device was reflected so that an echo was captured by the respective radar device. If, for example, the second vehicle is located in front of the first vehicle, the radar devices located in a front area of the first vehicle may each capture multiple points at a rear area of the second vehicle so that the three-dimensional point cloud describes the rear area of the second vehicle. The point cloud determining algorithm comprises at least one rule that is applied on the captured radar information to calculate the three-dimensional point cloud. Each point of the point cloud may describe a distance to the first vehicle. In case of multiple second vehicles there may be one point cloud for each one of the second vehicles. Preferably, the determined three-dimensional point cloud or point clouds allow differentiating between individual second vehicles in the environment.

The method comprises determining a relation information by applying a relation determining algorithm on the three-dimensional point clouds. The relation information describes the translational and rotational relation between the point clouds at the consecutive points in time. Hence, the relation information describes a position and orientation change between, for example, a respective point of the first point cloud determined at the first point in time and the respective point of a second point cloud determined at the second point in time. Hereby, the respective point of the first point cloud is tracked and thus identified in the second point cloud. This is in particular done for multiple points in time and for all points which are comprised by the multiple point clouds. The relation information considers a translational movement in, for example, a height, length and/or width direction, in particular with respect to a coordinate system of the first vehicle (x, y, z-direction). Furthermore, the relation information considers a rotational movement that may be described by a rotation matrix and/or at least one angle. The rotational movement may be described with respect to an angle coordinate system of the first vehicle. The relation determining algorithm comprises at least one rule that is applied to analyze the three-dimensional point clouds from the consecutive points in time so that the relation between the individual point clouds is calculated.

In other words, the radar information is analyzed to determine the three-dimensional point clouds for multiple points in time and then it is determined how individual points of these point clouds are moving translationally and rotationally with respect to each other over time.

The method comprises determining a movement information by applying a movement determining algorithm on the determined relation information. The movement determining algorithm comprises at least one rule that is applied on the determined relation information to calculate the movement information. The movement information describes the movement of the at least one second vehicle. The movement may be for example a translational or rotational movement of the second vehicle with respect to the first vehicle. It may, for example, be a translational and/or angular velocity of the second vehicle at the considered points in time.

The method comprises providing the determined movement information. For example, it may comprise providing the determined movement information to a function of the first vehicle. The function may be a driver assistance system, in particular for at least semi-automatic or even fully automatic driving of the vehicle. Thus, the determined movement information is actually used in the first vehicle, for example for the control of the first vehicle.

The radar system captures the radar information by using at least partially optical transmission techniques for at least a radar system internal transmission of data and/or information between the individual radar devices on one hand and a central control device of the radar system on the other hand. For example, the central control device may provide control commands for the radar devices, so that each radar device may transmit a specific electromagnetic wave towards the environment by its at least one transmitting antenna or transmitting and receiving antenna. The control commands are sent particularly fast to the radar devices if optical transmission techniques are used for at least a part of the transmission. Besides, each radar device may transmit the echo received by its receiving antenna or transmitting and receiving antenna to the central control device for further processing by using the optical transmission techniques. Thus, the echo is as well transmitted particularly fast. This increases a resolution of the radar system because multiple radar devices can be combined at high processing speed, for example compared to a classical radar system in which each radar device is controlled by an individual control unit and transmits its captured and/or analyzed data within the vehicle without using optical transmission techniques. Therefore, the described method is particularly fast and reliable so that, for example, real time movement information may be provided in the vehicle. The method hence allows to quickly provide the movement information about the second vehicle in an environment of the first vehicle.

The determining steps of the method and the following embodiments are preferably performed by the central control device of the radar system. This means that the central control device may at least determine the relation information and the movement information. It may as well determine further information described below and/or the three-dimensional point clouds.

An embodiment comprises that a function of the first vehicle receives the provided movement information. The function determines at least one control command for the first vehicle. The control command is in particular a control command for a drive system, a brake system and/or a steering system of the first vehicle. Then, the at least one control command may comprise instructions for a longitudinal and/or transversal guidance of the vehicle. The at least one control command is determined by applying a command determining algorithm on the received movement information. The command determining algorithm comprises at least one rule that is applied on at least the movement information and in particular on further sensor information available in the vehicle to determine the control demand for the first vehicle. The function then executes the determined control command. In other words, driving, braking and/or steering of the vehicle may be performed and controlled based on the movement information. If, for example, the movement information describes the movement of a second vehicle that is driving in front of the first vehicle on a neighboring lane of a road, the function may consider the received movement information to predict a movement of the second vehicle and to decide whether to increase or to decrease the velocity of the first vehicle and/or to change a driving direction of the first vehicle. The function may be a driver assistance system, such as, for example, an adaptive cruise command, a lane change assist, a lane change assistance, an emergency brake assist and/or a parking assist system.

Another embodiment comprises that a function of the first vehicle receives the provided movement information and verifies if an already determined control command for the first vehicle is executable by applying a verification algorithm on the received movement information. The already determined control command may be a control command for the drive system, brake system and/or steering system of the first vehicle. The already determined control command may be determined by the function and/or by a control device of the first vehicle, in particular prior to receiving the movement information. Preferably the already determined control command was determined independent of the movement information. The function that applies the verification algorithm may be the same function that applies the command determining algorithm or may differ from it.

The verification algorithm comprises at least one rule to decide whether the already determined control command should be executed considering the received movement information or if it should not be executed and hence discarded or overruled. If the already determined control command was found executable, the function executes the already determined control command. It is hence possible to check if the already determined control command should be executed by the first vehicle or not under consideration of the movement information. Only if this verification results in an executable already determined control command the function actually operates the first vehicle according to the already determined control command. This allows increases the reliability of the function.

A preferred embodiment comprises that the movement information at least describes a yaw angle, a roll angle and/or a pitch angle of the at least one second vehicle. In other words, movement of the second vehicle around a yaw axis, a roll axis and/or a pitch axis is calculated, each describing the current movement of the at least one second vehicle with respect to one of these axis. In case the relation information comprises a rotation matrix, the jaw angle, role angle and/or pitch angle may be determined by analyzing the rotation matrix.

The yaw angle describes a movement of the second vehicle around a height axis of the second vehicle (z-axis). The jaw angle describes a jaw rotation or rotation and hence a movement around the height axis pointing to the left or right in relation to a direction of motion of the second vehicle. The direction of motion is a driving direction of the second vehicle. In other words, the movement information may describe a movement of the second vehicle away from a straight forward or backward driving direction. By considering the jaw angle, early on information about possible lane changes of the second vehicle may be detected. This is particularly useful to decide, for example, if the second vehicle is potentially leaving its lane and may collide with the first vehicle.

The roll axis is a length axis of the second vehicle oriented in a length direction of the second vehicle. The pitch axis is perpendicular to the length axis. It is oriented in a width direction of the second vehicle. Vehicle roll or tail wag of the at least one second vehicle may be detected at an early stage by one or more of the three described angles, in particular by considering the yaw angle, the roll angle and the pitch angle. The detection of rolling or tail wag of the second vehicle is particularly relevant if the second vehicle is a truck, a bus and/or a vehicle with a trailer so that the first vehicle may react fast, for example, by braking and/or steering away from the rolling second vehicle.

Another embodiment comprises that the movement information at least describes a jaw angle rate, a role angle rate and/or a pitch angle rate for the at least one second vehicle. The respective rate describes an angular velocity of the rotation of the second vehicle around the respective axis, meaning the above-described jaw axis, role axis or pitch axis, respectively. The respective rate is hence a time-dependent change of the respective rotational movement. It may be understood as a change in jaw, role and/or pitch angle over a time interval. The time interval may be, for example, a time difference between the first and second point in time if the respective considered angles are determined for the first and second point in time. The respective angle rate hence comprises useful details on the movement of the second vehicle that may be of interest for the function of the first vehicle.

A further embodiment comprises that the movement information at least describes a translational velocity of the at least one second vehicle. In particular, it describes a translational velocity vector. The translational velocity may alternatively be referred to as a speed of the at least one second vehicle. The determined translational velocity is in particular a current velocity. In combination with the above-described jaw angle rate, role angle rate and/or pitch angle rate it is hence possible to analyze the movement of the second vehicle in all possible directions, meaning translational and rotational movement. The translational velocity may contribute to estimate how the second vehicle will move relative to the first vehicle, for example taking into account the first vehicle's own velocity.

Furthermore, an embodiment comprises that the movement information at least describes a position and orientation of the at least one second vehicle with respect to the first vehicle. In other words, the movement information may describe a pose of the at least one second vehicle. The position may be described by coordinates, in particular in the coordinate system of the first vehicle. The orientation may be described by at least one angle, in particular with respect to the angle coordinate system of the first vehicle. At least the orientation may be determined based on the relation information and/or the above-described angles. Therefore, by comparing individual point clouds over time, it is possible to determine the orientation of the second vehicle. The position may be determined based on a distance information comprised by the radar information and/or under consideration of the point clouds and/or the relation information. This supports a detailed analysis of the second vehicle and how it is located with respect to the first vehicle.

According to another embodiment, applying the relation determining algorithm on the three-dimensional point clouds comprises matching individual points of consecutive point clouds. It further comprises performing point registration to determine a translation vector and a rotation matrix to describe the relation. Matching the individual points of the consecutive point clouds may be achieved by applying a method of nearest neighbor or other measures to determine a similarity of individual points of point clouds determined for consecutive points in time. For example, some points from the first point cloud for the first point in time are marked and searched for in the second point cloud for the second point in time so that respective points of the first point cloud and the second point cloud are associated with each other. Performing point registration may comprise that methods of point registration are applied to register the point clouds. This may be done by iterative closest point (ICP) to determine the translation vector $t(x, y, z)$ and the rotation matrix $R$ that define how the, for example, at least two point clouds are in relation with one another. The method may comprise minimizing a cost function to determined $t$ and $R$. This explains how the relation determining algorithm determines the relation information in a particularly reliable way.

Another preferred embodiment comprises that the radar system performs a pre-scan of the environment of the first vehicle to determine in which part of the environment at least one vehicle of interest is located. If, for example, the first vehicle is driving with an activated adaptive cruise control as function, it may be useful to observe an area in front of the vehicle when viewed in driving direction of the first vehicle. Besides, the vehicle of interest may be located ahead in driving direction on a neighboring lane. Therefore, vehicles ahead in driving direction and in front of and/or laterally to the first vehicle may be vehicles of interest in this example.

The embodiment comprise adjusting a field of view of the radar system so that it covers at least the determined part of the environment in which the at least one vehicle of interest is located. As a result, the captured radar information describes the determined part of the environment and hence the at least one vehicle of interest, which is then the at least one second vehicle. In particular, only radar information from the determined part are captured and considered to determine the three-dimension point clouds. In other words, the method comprises the pre-scan to determine a required field of view of the radar system by identifying the part of the environment with the vehicle of interest. The radar system is then adjusted to the required field of view. The environment described by the radar information is thus adaptable depending on a situation of the first vehicle.

If, for example, the radar system comprises radar devices which are located all around the vehicle, it is possible to select some of the radar devices for capturing radar information, whereas other radar devices may not contribute to the captures radar information because they cannot describe the vehicle of interest and hence the at least one second vehicle. These other radar device may be paused or their radar information may remain unconsidered. Preferably, the part of the environment that comprises the vehicle of interest is located in the front of the vehicle when viewed in driving direction. Then, for example, the radar information captured by radar devices on a side and/or a rear of the first vehicle may remain unconsidered. The pre-scan hence allows to reduce an amount of radar information that has to be captured and considered to determine the three-dimension point clouds and then the relation information and the movement information. This further decreases the amount of time necessary to perform the method.

Moreover, the radar system may adjust a detection range of the radar system accordingly meaning dependent on the pre-scan and the vehicle of interest. This adjustment may select a maximal range, an opening angle in azimuth and/or an opening angle in elevation of the radar system, so that the radar system covers the entire determined part of the environment.

Another embodiment comprises that at least one glass fiber at least in sections connects the central control device and the individual radar device of the radar system. The at least one glass fiber enables the radar system internal transmission of data and/or information which is optically encoded. The optically encoded data, such as control commands for the radar devices and/or captured radar information, may be coupled into the at least one glass fiber and transmitted via the at least one glass fiber. In particular, all internal communication between each one of the radar devices on one hand and the central control device on the other hand runs through the glass fiber, in particular through multiple glass fiber. This clarifies how the optical transmission of data can be achieved in a reliable way.

Another embodiment comprises that the central control device comprises an optical transmitting unit. The optical transmitting unit provides an optically encoded control command for the respective radar device. It may comprise at least one control command for each one of the multiple radar devices. The control commands may differ from one another or may be the same. The optical transmitting unit couples the optically encoded control command into the at least one glass fiber that connects the central control device and the radar device for which the control command was determined. The respective radar device comprises an optical receiving unit that receives the optically encoded control command and converts it into an electronically encoded control command. The respective radar device transmits electromagnetic waves according to the electrically encoded control command that was encoded by the optical receiving unit. For example, the control command that was first transmitted optically and then converted into the electrically encoded control command comprises a frequency, a beam size, a beam direction and/or another setting for the electromagnetic waves that should be transmitted by the transmitting antenna or the transmitting and receiving antenna of the radar device. In the described way, each of the multiple radar devices receives its control command particularly fast and executes it.

Preferably each radar device only comprises one transmitting antenna so that only control commands for this one transmitting antenna are provided in the described way. The transmitting antenna may be a transmitting and receiving antenna. However, the radar device may comprise multiple transmitting antennas and/or transmitting and receiving antenna. In this case, the control command is provided for each antenna individually and/or as a combined control command.

Another embodiment comprises that the respective radar device comprises an optical modulation unit. The optical modulation unit converts received echo or echoes into an optically encoded echo information and couples it into the at least one glass fiber. The respective echo is created when the transmitted electromagnetic waves are reflected on an object in the environment, wherein the object is here the at least one second vehicle, in particular at least a point on the surface of the second vehicle. The echo hence describes the second vehicle. The received echo is converted into an optically encoded echo information that is transmitted to the central control device by means of the glass fiber. The central control device comprises an optical receiving unit and an evaluation unit. The optical receiving unit receives the optically encoded echo information from the glass fiber and the evaluation unit evaluates the optically encoded echo and outputs the radar information derived therefrom. This means that the radar information that is used by the method was first transmitted as an optically encoded information and is then back transformed into data that is suitable for further processing by the central control device. This explains how the optical transmission of data within the radar system is performed to decrease transmission times in the radar system.

Another embodiment comprises that the optically encoded control command is created by modulating the control command on a predetermined optical carrier frequency. In particular, the control command is modulated with a predetermined fraction of the frequency of the transmitted electromagnetic wave. Alternatively or additionally, the optically encoded echo information is created by modulating the received echo on the predetermined optical carrier frequency. In particular, it is modulated with the predetermined fraction of the frequency of the received echo. In a preferred example, the fraction is 1 to 8. This describes how the conversion between optically encoded and electronically encoded data is achieved in the sense of the invention.

For use cases or use situations which may arise during the method and which are not explicitly described here, an error message and/or a request for user feedback may be provided and/or output. Alternatively or additionally, a default setting and/or a predetermined initial state is set in accordance with the method.

An algorithm in the sense of the invention may alternatively be referred to as a model or a process.

Another aspect of the invention relates to a radar system for a vehicle. The radar system comprises multiple radar devices and the central control device. The radar system is configured to perform the above-described method. It performs the above-described method.

In a preferred embodiment, the inventive radar system may be a radar system as described in document DE 10 2017 221 257 A1. Features described there may be considered as embodiments of the inventive method and/or radar system.

A further aspect of the invention relates to a vehicle with the above-described radar system. The vehicle is preferably a motor vehicle, for example, a passenger car, a truck, a bus, a motorcycle and/or a moped.

A preferred embodiment of the inventive vehicle comprises that the radar system comprises multiple radar devices that are spatially distributed around the entire vehicle. In particular, there are multiple radar devices in different locations when viewed in height direction, length direction and/or width direction of the vehicle. Thus, the radar information may capture a 360 degree point cloud of the entire environment of the vehicle.

The central control device may be a processor unit. It may comprise at least one microprocessor, microcontroller, FPGA (Field Programmable Gate Array) and/or DSP (Digital Signal Processor). Furthermore, it may comprise program code. The program code may be stored in a data memory of the central control device.

The embodiments described in connection with the method, both individually and in combination with each other, apply accordingly, when applicable, to the inventive radar device and vehicle. The invention comprises combinations of the described embodiments.

Examples of embodiments of the invention are described below. Thereby show:

Fig. 1    a schematic representation of a vehicle with a radar system,

Fig. 2    a schematic representation of a first vehicle driving behind two second vehicles,

Fig. 3    a schematic representation of a point cloud for the second vehicle,

Fig. 4    a schematic representation to determine a relation between point clouds,

Fig. 5    a schematic representation of steps of a method to provide a movement information about at least one second vehicle by a first vehicle, and

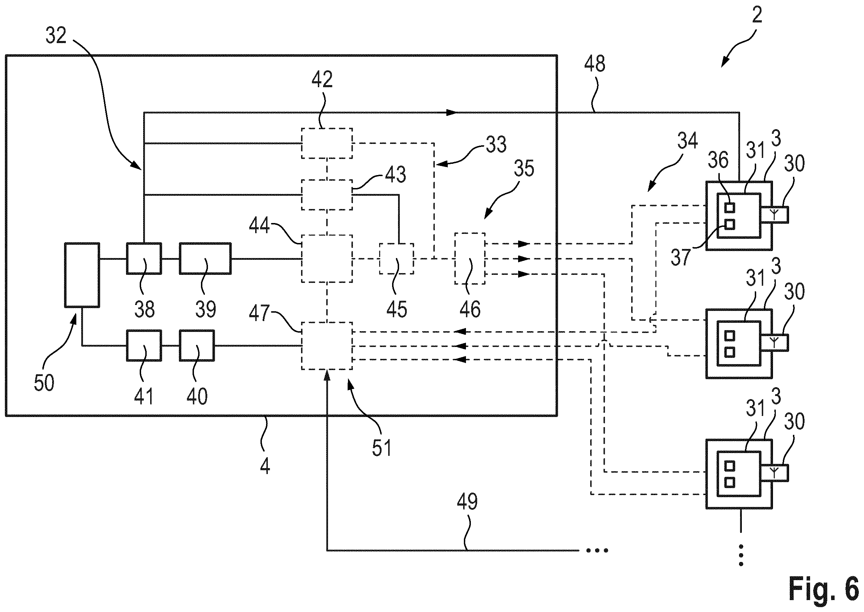

Fig 6    a schematic representation of a radar system for a vehicle.

The embodiment explained below are preferred embodiments of the invention. In the embodiments, the described components each represent individual features of the invention which are to be considered independently of each other, which also further form the invention independently of each other and are thus also to be regarded as part of the invention individually or in a combination other than that shown. Furthermore, the described embodiments can also be supplemented by further features of the invention already described.

In the figures, same components are labeled with the same reference signs.

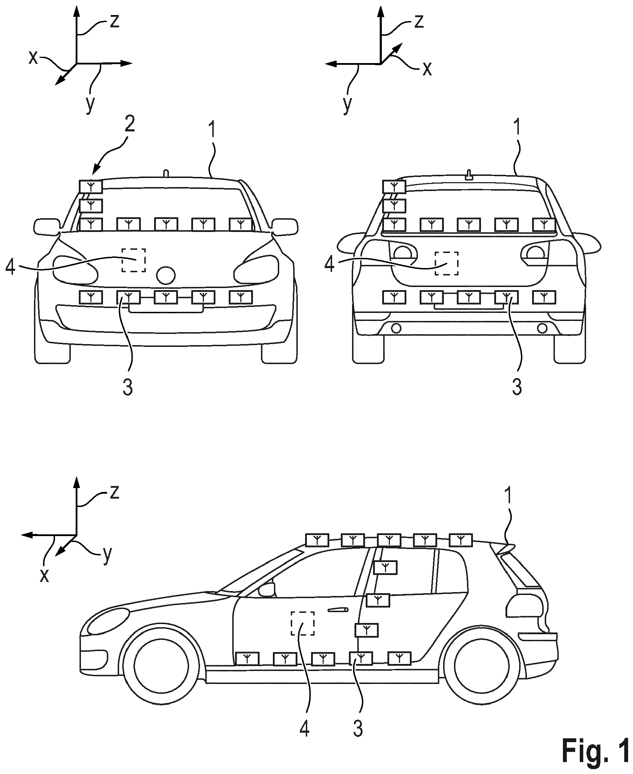

Fig. 1 shows a first vehicle 1 from different perspectives so that a front, rear and a side of the first vehicle are shown. The first vehicle 1 comprises a radar system 2. The radar system comprises multiple radar devices 3. The radar devices 3 are preferably spatially distributed around the first vehicle 1. In a preferred example, they are located at different positions when viewed in a height direction (z-direction), a length direction (x-direction) and/or a width direction (y-direction) of the first vehicle 1. The individual radar devices 3 may, for example, be located at an A, B, C or D pillar of the first vehicle 1. In particular, at least some of the radar device 3 may be located at a bumper of the first vehicle 1 and/or in a bottom area of a windshield and/or a rear window of the first vehicle 1. Moreover, at least some radar devices 3 may be located at a roof of the first vehicle 1. The sketched positions of the individual radar devices 3 are exemplarily. More, less and/or otherwise located radar devices 3 are possible.

The radar system 2 comprises a central control device 4. For example, the central control device 4 may provide control commands for the individual radar devices 3 of the first vehicle 1 and or perform processing tasks.

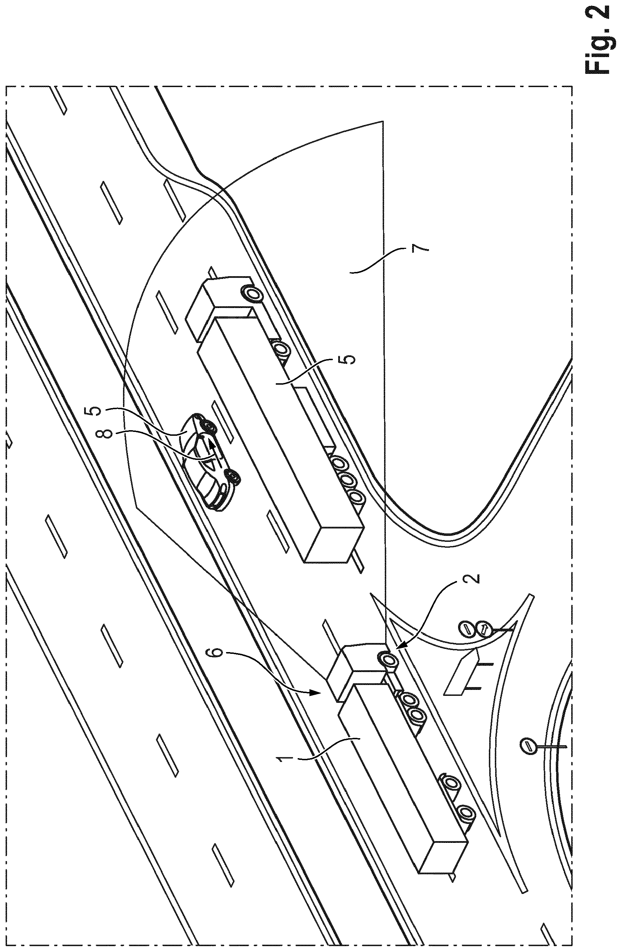

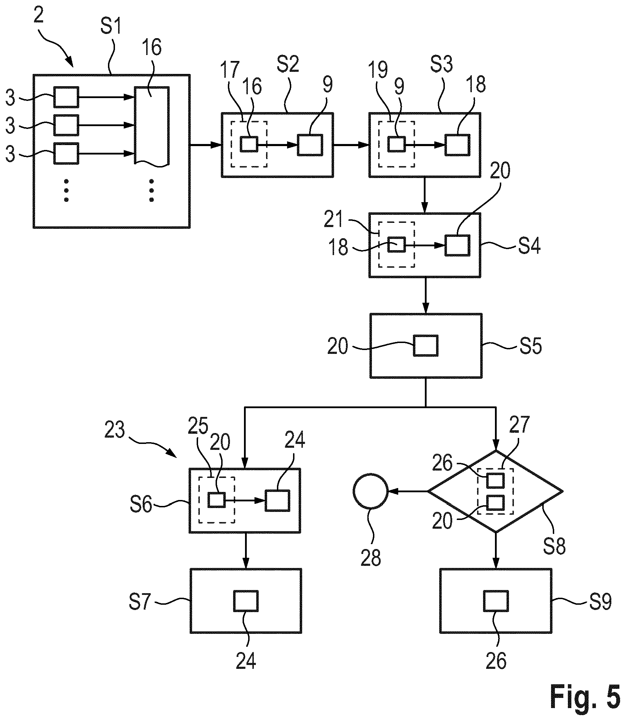

Fig. 2 shows a situation in which the first vehicle 1 is driving on a road. The first vehicle 1 comprises the radar system 2 which at least comprises radar devices 3 at its front. The radar system 2 is configured to capture a radar information 16 (see reference sign 16 in Fig. 5) that describes at least a part of an environment 6 of the first vehicle 1. In the environment 6 at least one second vehicle 5 is located. Here, there is a passenger car as second vehicle 5 as well as a truck as another second vehicle 5. A coverage area 7 of the radar system 2 in the front is sketched as well. For one of the second vehicles 5, an direction arrow 8 is sketched that shows a direction of movement of the second vehicle 5. Here, all vehicles 1, 5 have the same direction of movement.

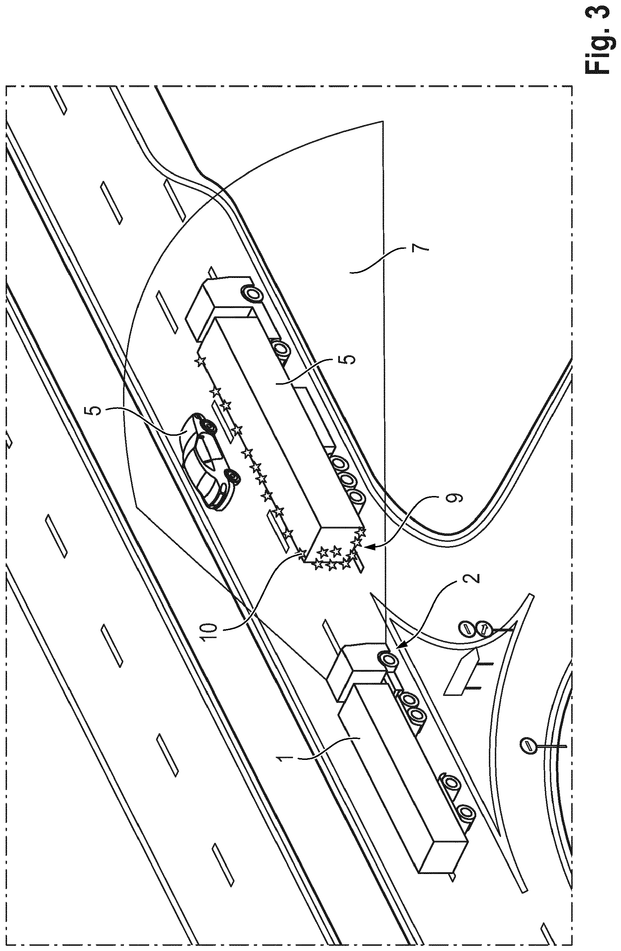

Fig. 3 shows that the individual second vehicles 5 are preferably captured in a way that a three-dimensional point cloud 9 may be determined that shows at least the outlines of the second vehicles 5. Each one of the point clouds 9 consist of multiple individual points 10.

Here, only points 10 may be determined which are in the coverage area 7 of the radar system 2.

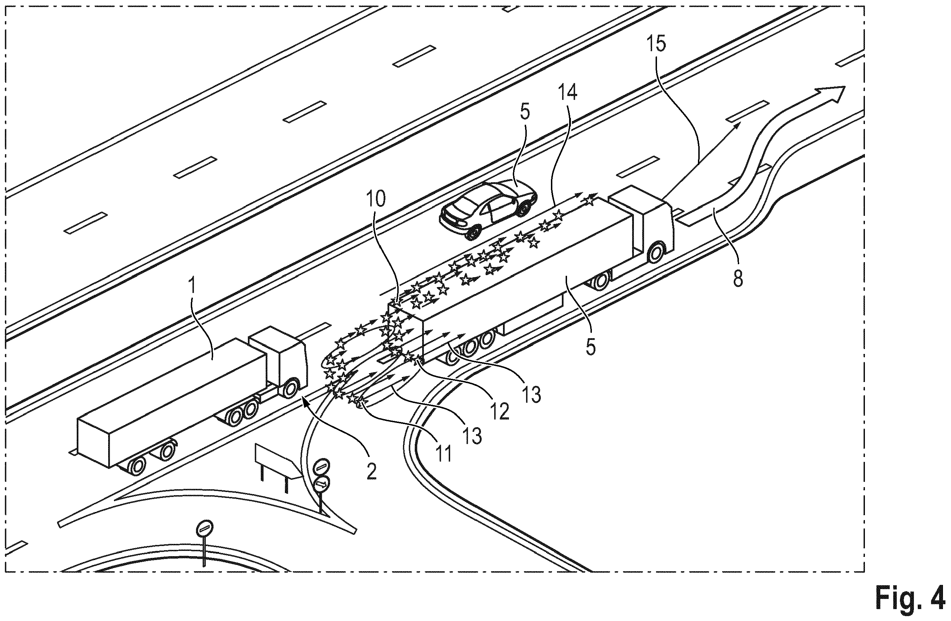

Fig. 4 shows the main idea of the intention. This main idea is about determining relations between individual points 10 of the point clouds 9 that were captured at different points in time. For example, multiple first points 11 are sketched that were determined for a first point in time. Additionally, multiple second points 12 are sketched that were determined for a second point in time that differs from the first point in time. Therefore, Fig. 4 shows two point clouds 9 each describing the second vehicle 5 at a specific point in time.

Fig. 4 indicates a trailer velocity direction 14 of the trailer of the second vehicle 5 which is here the truck with the trailer. Moreover, a truck velocity direction 15 is sketched that describes the movement direction of the front part of the truck as the second vehicle 5. The expected movement of the second vehicle is sketched by the direction arrow 8. Besides, point velocity directions 13 are sketched for the points in time. A respective first point velocity direction 13 shows the velocity direction at the respective first point 11 and a respective second point velocity direction 13 shows the velocity direction at the respective second point 12.

Fig. 5 shows steps of a method to provide a movement information 20 that describes the at least one second vehicle 5. The method is performed by the first vehicle 1, more precisely by the radar system 2 of the first vehicle 1. The method comprises in a step S1 capturing the radar information 16 at least at two consecutive points in time. The radar information 16 describes at least a part of the environment 6 of the first vehicle 1 wherein in this part of the environment 6 the at least one second vehicle 5 is located. These consecutive points in time may be referred to as a first point in time, a second point in time, a third point in time and so on. The radar system 2 comprises multiple radar devices 3. As an example, three radar devices 3 are sketched in Fig. 5. More radar devices 3 are possible. The more radar devices 3, the higher may be the resolution of the radar information 16.

A step S2 may comprise determining the three-dimensional point cloud 9 for each point in time by applying a point cloud determining algorithm 17 on the captured radar information 16. The respective point cloud 9 describes the at least one second vehicle 5. Here, for example, the two point clouds 9 sketched in Fig. 4 may be determined, meaning the point cloud 9 that comprises the first points 11 and the second point cloud 9 that comprises the second points 12.

A step S3 may comprise determining a relation information 18 that describes a translational and rotational relation between the point clouds 9 at the consecutive points in time. The relation information 18 may be determined by applying a relation determining algorithm 19 on the three-dimensional point clouds 9 that were determined in step S2. In more detail, applying the relation determining algorithm 19 may comprise matching individual points 10 of consecutive points clouds 9 and performing a point registration determining a translation vector t(x, y, z) and a rotation matrix R which both describe the relation between the second vehicle 5 at the first point in time and the second point in time.

A step S4 may comprise determining the movement information 20 that describes a movement of the at least one second vehicle 5. The movement information 20 may be determined by applying a movement determining algorithm 21 on the determined relation information 18. In more detail, the movement information 20 may at least describe a yaw angle, a roll angle and/or a pitch angle of the at least one second vehicle 5. Alternatively or additionally, it may describe at least a yaw angle rate, a roll angle rate and or a pitch angle rate of the at least one second vehicle 5. Alternatively or additionally, the movement information 20 may describe a translation velocity of the second vehicle 5, in particular its translational velocity vector which shows the velocity in x-, y-, and z-direction. Alternatively or additionally, the movement information 20 may at least describe a position and orientation of the second vehicle 5 with respect to the first vehicle 1. In this case, it describes a pose of the second vehicle 5.

A step S5 may comprise providing the determined movement information 20. In a preferred example, it is provided to a function 23 of the first vehicle 1 which may be a driver assistance system.

A step S6 may comprise that the function 23 receives the provided movement information 20. The function 23 may determine at least one control command 24 for the first vehicle 1 by applying a command determining algorithm 25 on the received movement information 20. The control command 24 is in particular configured for a drive system, a brake system and/or a steering system of the first vehicle 1. In a step S7 the function 23 may execute the determined control command 24.

Alternatively or additionally, the function 23 may receive the provided movement information 20 and may use it to verify if an already determined control command 26 for the first vehicle 1 is executable. This is achieved by applying a verification algorithm 27 on the received movement information 20 in a step S8. Here, the already determined control command 26 is in particular intended for the drive system, the brake system and/or the steering system of the first vehicle 1. In a step S9 in case the already determined control command 26 is executable, the function 23 executes the already determined control command 26. The verification algorithm 27 is here applied on the received movement information 20 and on the already determined control command 26. In case the already determined control command 26 is found not-executable in step S8, the method may be terminated 28.

The radar system 2 may perform a pre-scan of the environment 6 of the first vehicle 1 to determine, in which part of the environment 6 at least one vehicle of interest is located. It may then adjust a field of view of the radar system 2 so that it covers at least the determined part of the environment 6 so that the captured radar information 16 describes the at least one vehicle of interest as the at least one second vehicle 5. The pre-scan may be performed prior to step S1. The field of view is here the coverage area 7 sketched in Fig. 2 and Fig. 3.

Fig. 5 shows in more detail the radar system 2. Each one of the multiple radar devices 3 comprises at least one transmitting and/or receiving antenna 30 as well as a control unit 31. The control unit 31 is preferably a chip to, for example, control the at least one antenna 30. In a preferred embodiment, the control unit 31 is an electronic-photonic co-integrated chip (EPIC).

The radar system 2 captures the radar information 16 by using optical transmission techniques for radar system internal transmission of data and/or information between the individual radar devices 3 on one hand and the central control device 4 of the radar system 2 on the other hand. Here, all data transmission based on optical transmission techniques and hence optically encoded data connections and/or transmissions is sketched with dashed lines 32. All electronically encoded data transfer via electronic channels is sketched with continuous lines 33. Components sketched with dashed outlines are optical components whereas components with continuous outlines are electronic components.

At least one glass fiber 34 at least in sections may connect the central control device 4 and the individual radar devices 3 and enables the radar system internal transmission of data and/or information with optical transmission techniques.

The central control device 4 may comprise an optical transmitting unit 35 that may provide an optically encoded control command for the respective radar device 3 and may couple it as an optically encoded control command into the at least one glass fiber 34. The respective radar device 3 may comprise an optical receiving unit 36 that may receive the optically encoded control command and may convert it into an electronically encoded control command. Based on this electronically encoded control command the respective radar device 3 may transmit electromagnetic waves according to the electronically encoded control command in the environment 6 of the first vehicle 1.

The respective radar device 3 may comprise an optical modulation unit 37 that may convert the received echoes that are received when the electromagnetic waves are reflected on an object in the environment 6 such as the at least one second vehicle 5, and may convert it into an optically encoded echo information. The optically encoded echo information may be coupled into the at least one glass fiber 34. The central control device 4 may comprise an optical receiving unit 51 and an evaluation unit 50. The optical receiving unit 51 may receive the optically encoded echo information and the evaluation unit 50 may evaluate it and may output the radar information 11 derived therefrom. This is then the captured radar information 11.

Fig. 5 shows individual components to perform the described transformation and evaluation steps in more detail. The electronic components are hereby, for example, a control interface 38, an optional arbitrary waveform generator (AWG) 39 for laser modulation, a digital interface 40, in particular for an analog-digital converter (ADC), and/or a low level signal processing unit 41 to perform a fast-Fourier transformation. Moreover, an evaluation unit 36 may at least comprise a computing unit, in particular a central processing unit (CPU), a graphical processing unit (GPU) and/or a personal computer (PC) interface.

The optical components may be an optional feedback loop/control unit 42, a laser and/or interfering radiation source module 43, a gigahertz frequency synthesis module 44, an optical control module 45, an optical switch 46 and/or an optical detection/homodyne/heterodyne detection unit 47, including phase and/or length measurement. Moreover, Fig. 5 shows electronic output channels 48 to the control units 31 and an electronic back channel 49.

The optically encoded control command may be created by modulating the control command on a predetermined optical carrier frequency, in particular with a predetermined fraction of the frequency of the transmitted electromagnetic wave. Alternatively or additionally, the optical encoded echo information may be created by modulating the received echo on the predetermined optical carrier frequency, in particular with a predetermined fraction of the frequency of the received echo.

The central control device 4 may generate the optical carrier signal. This is fed into the gigahertz frequency synthesis module 44 and the synthesized gigahertz signal is forwarded in the optical spectral range via the glass fiber 34 to the control unit 31 (EPIC chips) to be emitted as a 77 gigahertz signal, for example. Signal detection takes place the other way round. All data is processed at the central control device 4.

In summary, the invention shows a tracking based yaw angle and post detection for the first vehicle 1. Reliable detection and monitoring of, for example, lane guidance of dynamic objects in the vehicle's field of vision is possible.

The underlying problems are:

i. Reliable monitoring of the driving behavior of vehicles 1, 5
ii. Automated adaptation of own vehicle guidance depending on the monitored driving behavior of surrounding vehicles 5.

The used approach is:

i. Use miniaturized, phontonically co-integrated radar chips in a coherently distributed, thinned array which is integrated into the first vehicle 1 over a large area (radar system 2);
ii. Online adjustment of the unobstructed field of view of the array and successive enlargement of this during the driving maneuver with the aim of detecting the environment required for the maneuver;
iii. Registration of successive radar point clouds to derive yaw, roll and pitch angles and their current pose
iv. Prediction of possible driving maneuvers of detected vehicles 5 to safeguard the first vehicle 1.

Advantages of the invention are: cost savings; gain in comfort; accident prevention; improved reliability regardless of weather conditions.

The safest possible perception of the surroundings (environment 6) is essential for automated driving. The surroundings are detected with the help of sensors such as radar, lidar and cameras. A holistic 360-degree, three-dimensional detection of the environment 6 is particularly important, so that all static and dynamic objects are detected. Lidar in particular has played a key role in redundant, robust environment detection in past research projects, as this type of sensor can measure distances precisely in environment detection and can also be used for classification. However, these sensors are cost-intensive and complex to set up. In particular, 360-degree, three-dimensional environment detection is problematic, as either many smaller individual sensors are required to ensure this, which generally work with many individual light sources and detector elements, or large sensors are installed. Furthermore, such Lidar systems are susceptible to weather influences such as rain, fog or direct sunlight.

Radar sensors have been established in the automotive sector for years and provide reliable and fail-safe data in all weather conditions. Even poor visibility conditions such as rain, fog, snow, dust and darkness hardly affect their perception reliability. However, their resolution has so far been limited. Standard radars in use have a resolution of approximately 2 degrees. In order to meet the requirements for levels 4 and 5 of automated driving with safe driving function, radar sensors must provide three-dimensional images with high resolution in the range of 0.1 degree and below with a high degree of insensitivity to interference from their surroundings. This cannot be achieved with conventional radar technology, as the resolution of such systems is too low.

Current developments in photonic radar systems 2 to increase resolution are based on the co-integration of electronic and photonic components in a single semiconductor. The generation of a frequency modulated continuous wave (FMCW) signal, as well as the entire signal processing and evaluation, are carried out by a central station (central control device 4). Each transmitter and receiver module (radar device 3) comprises an electronic-photonic co-integrated chip (so-called "EPIC chip") as control unit 31. Silicon photonics technology is used for co-integration. This enables the monolithic integration of photonic components, high-frequency electronics and digital electronics together on one chip ("electronic-photonic co-integration"). The technical innovation of such a system lies in the signal transmission of gigahertz signals by means of an optical carrier signal in the terahertz frequency range. A central station (central control device 4) generates an optical carrier frequency (terahertz). The signal to be transmitted is modulated to this frequency at 1/8 of the radar frequency and sent to the antenna chips via optical fiber (glass fiber 34). Frequency multiplication takes place on these so that the radar radiation can be emitted by the antenna chips. Signal detection takes place in the opposite direction. All data is processed by the central control device 4.

The principle of electronic-photonic co-integration in a chip, with silicon-on-insulator regions for the photonic components and bulk silicon regions for the electronic circuits can be used to achieve high signal quality with low parasitic interference, particularly at high data rates. The connection of the radio frequency (RF) circuits for the radar antennas 30, including frequency multipliers, to the optical transceiver can be implemented without additional wire or flip-chip bonding. In addition, chips can be optically and electrically tested at wafer level, enabling a high yield to be achieved in further module construction. Extremely compact form factors can be realized with this technology, making it highly relevant for the application of optical technologies based on silicon photonics in the automotive industry.

The obstacle to the productive use of glass fibers 34 lies in the lack of scalability of technologies available to date. This scalability to large volumes is made possible by the technology for highly integrated production of electronic photonic integrated circuits. The result is a significant cost reduction in assembly technology and a more efficient cost structure. Comprehensive libraries for electronic and photonic components for data transmission at high bandwidths are available from the development of data center solutions.

The inventive method comprises:

1. Fully coherent radar devices 3 in three dimensions and distributed 360 degrees around the first vehicle 1.
2. Detection of the environment 7 by the radar system 2.
3. Determination of the field of vision and identification of the field of view required for the maneuver.
4. Calculation of a three-dimensional point cloud 9 from measured distance, azimuth and elevation angle (meaning based on the radar information 16).
5. Capturing of two consecutive frames (points in time).
6. Point matching between consecutive frames (points in time) using "Nearest Neighbor" or other similarity measures

    a. $\hat{M}$: Resulting subset of associable points from frame number 1 (first point in time)
    b. $\hat{D}$: Resulting subset of associable points from frame number 2 (second point in time).

7. Application of a method for point registration such as Iterative Closest Point (ICP) to obtain translation t and rotation R by which both point clouds 9 are related to each other:

$$\boldsymbol{R} = \begin{pmatrix} \cos\theta_y\cos\theta_z & \sin\theta_x\sin\theta_y\cos\theta_z + \cos\theta_x\sin\theta_z & -\cos\theta_x\sin\theta_y\cos\theta_z + \sin\theta_x\sin\theta_z \\ -\cos\theta_y\sin\theta_z & -\sin\theta_x\sin\theta_y\sin\theta_z + \cos\theta_x\cos\theta_z & \cos\theta_x\sin\theta_y\sin\theta_z + \sin\theta_x\cos\theta_z \\ \sin\theta_y & -\sin\theta_x\cos\theta_y & \cos\theta_x\cos\theta_y \end{pmatrix}$$

and

$$\boldsymbol{t} = \begin{pmatrix} x & y & z \end{pmatrix}$$

With minimization of the following cost function to obtain R and t:

$$E(\boldsymbol{R}, \boldsymbol{t}) = \sum_{i=1}^{|\hat{M}|} \sum_{j=1}^{|\hat{D}|} \left\| \widehat{m_i} - (\widehat{\boldsymbol{R}} d_j + \boldsymbol{t}) \right\|$$

With $\boldsymbol{m}_i$: three-dimensional coordinate of point (i) of frame number 1 (first point in time); and $\boldsymbol{d}_j$: three-dimensional coordinate of point (j) of frame number 2 (second point in time).

8. Derivation of yaw, roll and pitch angle from the rotation matrix R:

$$R(\theta_x, \theta_y, \theta_z)$$

with yaw angle $\theta_x$, roll angle $\theta_y$ and pitch angle $\theta_z$.

9. Calculation of yaw angle rate, roll angle rate and pitch angle rate:

a. $\omega_x = \dfrac{\theta_x^n - \theta_x^{n-1}}{t_{frame}}$ : yaw angle rate

b. $\omega_y = \dfrac{\theta_y^n - \theta_y^{n-1}}{t_{frame}}$ : roll angle rate

c. $\omega_z = \dfrac{\theta_z^n - \theta_z^{n-1}}{t_{frame}}$ : pitch angle rate.

10. Calculation of translational velocity vector ($v_x$, $v_y$, $v_z$):

a.

$$v_x = \frac{x^n - x^{n-1}}{t_{frame}}:$$

b.

$$v_y = \frac{y^n - y^{n-1}}{t_{frame}}:$$

c.

$$v_z = \frac{z^n - z^{n-1}}{t_{frame}}:$$

11. Determining the current pose *P*(*x, y, z*) with $\boldsymbol{P_n = P_{n-1}R + t}$
12. Detection environment.
13. Decision driving maneuvers feasible.
14. Transfer data to advanced driver assistance function 23.

**Reference sign list**

| | |
|---|---|
| 1 | First vehicle |
| 2 | Radar system |
| 3 | Radar device |
| 4 | Central control device |
| 5 | Second vehicle |
| 6 | Environment |
| 7 | Coverage area |
| 8 | Direction arrow |
| 9 | Point cloud |
| 10 | Point |
| 11 | First point |
| 12 | Second point |
| 13 | Point velocity directions |
| 14 | Trailer velocity direction |
| 15 | Truck velocity direction |
| 16 | Radar information |

| | |
|---|---|
| 17 | Point cloud determining algorithm |
| 18 | Relation information |
| 19 | Relation determining algorithm |
| 20 | Movement information |
| 21 | Movement determining algorithm |
| 23 | Function |
| 24 | Control command |
| 25 | Command determining algorithm |
| 26 | Already determined control command |
| 27 | Verification algorithm |
| 28 | Termination |
| 30 | Antenna |
| 31 | Control unit |
| 32 | Dashed lines |
| 33 | Continuing lines |
| 34 | Glass fiber |
| 35 | Optical transmitting unit |
| 36 | Optical receiving unit |
| 37 | Optical modulation unit |
| 38 | Control interface |
| 39 | optional arbitrary waveform generator |
| 40 | Digital interface |
| 41 | Low level signature processing unit |
| 42 | Feedback loop/control unit |
| 43 | Laser and/or interfering radiation source module |
| 44 | Gigahertz frequency synthesis module |
| 45 | Optical control module |
| 46 | Optical switch |
| 47 | Optical detection/homodyne/heterodyne detection unit |
| 48 | Electronic output channel |
| 49 | Electronic back channel |
| 50 | Evaluation unit |
| 51 | Optical receiving unit |
| S1 - S9 | steps |

**Claims**

1. Method to provide a movement information (20) about at least one second vehicle (5) by a first vehicle (1), comprising:

   - capturing a radar information (16) describing at least a part of an environment (6) of the first vehicle (1) in which the at least one second vehicle (5) is located at least at two consecutive points in time, by a radar system (2) of the first vehicle (1) comprising multiple radar devices (3);
   - determining a three-dimensional point cloud (9) for each point in time by applying a point cloud determining algorithm (17) on the captured radar information (16), wherein the respective point cloud (9) describes the at least one second vehicle (5);
   - determining a relation information (18) describing a translational and rotational relation between the point clouds (9) at the consecutive points in time by applying a relation determining algorithm (19) on the three-dimensional point clouds (9);
   - determining a movement information (20) describing a movement of the at least one second vehicle (5) by applying a movement determining algorithm (21) on the determined relation information (18); and
   - providing the determined movement information (20);

   wherein the radar system (2) captures the radar information (16) by using at least partially optical transmission techniques for radar system internal transmission of data and/or information between the individual radar devices (3) and a central control device (4) of the radar system (2).

2. Method according to claim 1, wherein a function (23) of the first vehicle (1) receives the provided movement information (20), determines at least one control command (24) for the first vehicle (1), in particular for a drive system, brake system and/or steering system of the first vehicle (1), by applying a command determining algorithm (25) on the received movement information (20), and executes the determined control command (24).

3. Method according to claim 1 or 2, wherein a function (23) of the first vehicle (1) receives the provided movement information (20), verifies if an already determined control command (26) for the first vehicle (1), in particular for a drive system, brake system and/or steering system of the first vehicle (1), is executable by applying a verification algorithm (27) on the received movement information (20) and the already determined control command (26), and only if this is the case executes the already determined control command (26).

4. Method according to any one of the preceding claims, wherein the movement information (20) at least describes a yaw angle, a roll angle and/or a pitch angle of the at least one second vehicle (5).

5. Method according to any one of the preceding claims, wherein the movement information (20) at least describes a yaw angle rate, a roll angle rate and/or a pitch angle rate for the at least one second vehicle (5).

6. Method according to any one of the preceding claims, wherein the movement information (20) at least describes a translational velocity of the at least one second vehicle (5), in particular a translational velocity vector.

7. Method according to any one of the preceding claims, wherein the movement information (20) at least describes a position and/or orientation of the at least one second vehicle (5) with respect to the first vehicle (1).

8. Method according to any one of the preceding claims, wherein applying the relation determining algorithm on the three-dimensional point clouds (9) comprises matching individual points of consecutive point clouds (9) and performing point registration to determine a translation vector and a rotation matrix to describe the relation.

9. Method according to any one of the preceding claim, wherein the radar system (2) performs a pre-scan of the environment (6) of the first vehicle (1) to determine, in which part of the environment (6) at least one vehicle of interest is located, and adjusts a field of view of the radar system (2) so that it covers at least the determined part of the environment (6) so that the captured radar information (16) describes the at least one vehicle of interest as the at least one second vehicle (5).

10. Method according to any one of the preceding claims, wherein at least one glass fiber (34) at least in sections connects the central control device (4) and the individual radar devices (3) and enables the radar system internal transmission of data and/or information.

11. Method according to claim 10, wherein the central control device (4) comprises an optical transmitting unit (35) that provides an optically encoded control command for the respective radar device (3) and couples the optically encoded control command into the at least one glass fiber (34), wherein the respective radar device (3) comprises an optical receiving unit (36) receiving the optically encoded control command and converting it into an electrically encoded control command, so that the respective radar device (3) transmits electromagnetic waves according to the electrically encoded control command.

12. Method according to claim 10 or 11, wherein the respective radar device (3) comprises an optical modulation unit (37) that converts a received echo into an optically encoded echo information and couples it into the at least one glass fiber (34), wherein the central control device (4) comprises an optical receiving unit (51) and an evaluation unit (50), wherein the optical receiving unit (51) receives the optically encoded echo information and the evaluation unit (50) evaluates it and outputs the radar information (11) derived therefrom.

13. Radar system (2) for a vehicle (1, 5) comprising multiple radar devices (3) and a central control device (4), wherein the radar system (2) is configured to perform a method according to any one of the claims 1 to 12.

14. Vehicle (1, 5) with a radar system (2) according to claim 13.

15. Vehicle (1, 5) according to claim 14, wherein the radar system (2) comprises multiple radar devices (3) that are spatially distributed around the entire vehicle (1, 5).

Fig. 1

Fig. 2

Fig. 3

Fig. 4

Fig. 5

Fig. 6

Europäisches
Patentamt
European
Patent Office
Office européen
des brevets

# EUROPEAN SEARCH REPORT

**Application Number**

EP 24 15 4804

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 8 989 944 B1 (AGARWAL PRATIK [US] ET AL) 24 March 2015 (2015-03-24)<br>* column 1, line 26 - column 2, line 38 *<br>* column 3, line 16 - column 17, line 59 *<br>* figures 1-5 *<br>* claims 1, 6, 7 * | 1-15 | INV.<br>G01S7/292<br>G01S13/58<br>G01S13/72<br>G01S13/87<br>G01S13/89<br>G01S13/931 |
| Y | EP 3 489 712 A1 (VOLKSWAGEN AG [DE]; AUDI AG [DE]) 29 May 2019 (2019-05-29)<br>* paragraphs [0005] - [0016], [0029] - [0034] *<br>* figure 1 * | 1-15 | |
| A | US 2016/061936 A1 (SCHMALENBERG PAUL DONALD [US] ET AL) 3 March 2016 (2016-03-03)<br>* paragraphs [0002] - [0008], [0019] - [0034] *<br>* figures 1-9 * | 1-15 | |

| | |
|---|---|
| | **TECHNICAL FIELDS SEARCHED (IPC)**<br><br>G01S |

The present search report has been drawn up for all claims

| Place of search | Date of completion of the search | Examiner |
|---|---|---|
| Munich | 17 July 2024 | Kruck, Peter |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 15 4804

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2024

| Patent document cited in search report | | Publication date | Patent family member(s) | | Publication date |
|---|---|---|---|---|---|
| US 8989944 | B1 | 24-03-2015 | NONE | | |
| EP 3489712 | A1 | 29-05-2019 | CN | 109839616 A | 04-06-2019 |
| | | | DE | 102017221257 A1 | 29-05-2019 |
| | | | EP | 3489712 A1 | 29-05-2019 |
| | | | US | 2019162819 A1 | 30-05-2019 |
| US 2016061936 | A1 | 03-03-2016 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230136923 A1
- US 20220231406 A1
- DE 102019114883 B3
- DE 102017221257 A1